# EUROPEAN PATENT APPLICATION

(11) **EP 1 911 563 A1**
(43) Date of publication of application: **16.04.2008**
(21) Application number: 07019732.2
(22) Date of filing: 09.10.2007
(51) Int. Cl.: B29C 45/26, B29C 45/76

(54) **Method for a hot runner injection molding system**

(30) Priority: 12.10.2006 US 548769
(71) Applicant: Mold-Masters (2007) Limited, Georgetown ON L7G 4X5 (CA)
(72) Inventor: Trudeau, Robert, Spartanburg SC29301 (US)
(74) Representative: Grünecker, Kinkeldey, Stockmair & Schwanhäusser Anwaltssozietät

(57) **Abstract**

A method for a hot runner injection molding system. The injection molding system has a plurality of melt conveying components defining a melt path from a melt source to a mold cavity and a mold housing. A force sensor or load cell is utilized between at least one melt conveying component of the system and the mold housing to measure a force generated due to thermal expansion of the melt conveying component during start-up and/or operation of the system and to provide an output to a receiving device. In an embodiment, once a sealing load or a predetermined preload force has been reached, an injection molding cycle may begin.

## Description

### FIELD OF THE INVENTION

The invention relates to hot runner injection molding systems, and particularly to a method for preventing melt leakage in a hot runner injection molding system.

### BACKGROUND OF THE INVENTION

In accordance with the design of most hot runner injection molding systems, the systems are required to fully reach their operating temperatures to allow thermal expansion of their component parts, e.g., one or more manifolds and hot runner nozzles, in order to seal the melt path and prevent leakage during operation. Traditionally determining whether a proper sealing load, i.e., sufficient thermal expansion between its component parts to cause sealing there between, has being reached in a hot runner system has been monitored by measuring the temperature of the system. However, measuring temperature is an indirect method of determining the load on the system that can be adversely affected by a number of variables. As an example, if the proper temperature has been reached, but insufficient soak time has been allowed for the system to establish equilibrium and a proper seal, then the system may leak.

Other variables that may lead to temperature being an inaccurate measure of sealing load are thermocouple placement, heat loss to the surrounding area, and wear and tear between sealing surfaces of adjoining hot runner components. In addition, an operator running the injection molding machine who does not have actual knowledge of what is occurring at the sealing interfaces of the hot runner system during start-up relies on his skill, and possibly a bit of guess work, when determining whether a proper sealing load has been reached that then allows for operation to begin. Accordingly, an inexperienced operator, or one anxious to begin molding, may begin the injection molding process before the proper sealing loads that create leak tight seals have been achieved in the system. All of the above variables can result in costly downtime of the hot runner system while the often detrimental consequences of melt leakage are addressed.

### BRIEF SUMMARY OF THE INVENTION

According to an embodiment of the present invention, a method of operating an injection molding system having a plurality of melt conveying components defining a melt path from a melt source to a mold cavity and a mold housing includes bringing the melt conveying components of the system up to an operating temperature, and monitoring a force between at least one of the melt conveying components and the mold housing while the system is being brought-up to the operating temperature, such that the force being measured is the result of thermal expansion of the melt conveying component. The method may further include beginning an injection molding cycle once a sealing load is reached.

An embodiment is directed to an injection molding system having a mold housing with a back plate and a mold plate. The system includes a hot runner manifold positioned between the back plate and the mold plate and a force sensor positioned between the hot runner manifold and the mold housing. The force sensor is used for measuring a force between the manifold and the mold housing and providing an output to a receiving device, wherein the receiving device processes the force sensor output into at least one of a load value and an indicator signal.

In another embodiment, the injection molding system includes a hot runner injection molding nozzle for receiving a melt stream from the manifold, wherein a force sensor is disposed within a front end bore of the nozzle between a nozzle tip and a nozzle body to measure a force between the nozzle tip and the nozzle body and to provide an output to a receiving device, wherein the receiving device processes the force sensor output into at least one of a load value and an indicator signal.

In another embodiment, an injection molding system includes a hot runner injection molding nozzle for receiving a melt stream from a hot runner manifold, wherein a force sensor is disposed between an alignment collar or nozzle head of the nozzle and a shoulder of a nozzle bore to measure a force between the nozzle and the mold housing and to provide an output to a receiving device, wherein the receiving device processes the force sensor output into at least one of a load value and an indicator signal.

An injection molding system according to another embodiment includes a mold housing having a back plate and a mold plate. The system includes a hot runner main manifold positioned between the back plate and the mold plate with a main manifold melt channel and a melt outlet. A hot runner sub-manifold is positioned between the back plate and the mold plate with a sub-manifold melt channel and a melt inlet. The sub-manifold melt inlet is in fluid communication with the main manifold melt outlet. The system further includes a force sensor positioned between at least one of the main manifold and the sub-manifold and the mold housing to measure a force between the respective manifold and the mold housing and to provide an output to a receiving device, wherein the receiving device processes the force sensor output into at least one of a load value and an indicator signal.

### BRIEF DESCRIPTION OF DRAWINGS

The foregoing and other features and advantages of the invention will be apparent from the following description of the invention as illustrated in the accompanying drawings. The accompanying drawings, which are incorporated herein and form a part of the specification, further serve to explain the principles of the invention and to enable a person skilled in the pertinent art to make and use the invention. The drawings are not to scale.

FIG. 1 illustrates a partial cross-sectional view of an injection molding system 100 in which embodiments of the present invention may be utilized.

FIG. 2 illustrates a cross-sectional side view of an injection molding system 200 in accordance with an embodiment of the present invention.

FIG. 2A illustrates a portion of injection molding system 200 of FIG. 2 in accordance with another embodiment of the present invention.

FIG. 3 illustrates a cross-sectional side view of the injection molding system 200 of FIG. 2 in accordance with another embodiment of the present invention.

FIG. 4 illustrates a cross-sectional side view of the injection molding system 200 of FIG. 2 in accordance with another embodiment of the present invention.

FIG. 4A illustrates an enlarged view of the spacer and load cell arrangement shown in FIG. 4.

FIG. 5 illustrates a cross-sectional side view of the injection molding system 200 of FIG. 2 in accordance with another embodiment of the present invention.

FIG. 5A illustrates an enlarged view of the nozzle tip and load cell arrangement shown in FIG. 5.

FIG. 5B illustrates an enlarged view of the nozzle front end of FIG. 5 in accordance with another embodiment of the present invention.

FIG. 6 illustrates a cross-sectional side view of the injection molding system 200 of FIG. 2 in accordance with another embodiment of the present invention.

FIG. 6A illustrates an enlarged view of the nozzle tip and load cell arrangement shown in FIG. 6.

FIG. 6B illustrates an enlarged view of the nozzle front end of FIG. 6 in accordance with another embodiment of the present invention.

FIG. 7 illustrates a cross-sectional side view of a valve-gated injection molding system 700 in accordance with an embodiment of the present invention.

FIG. 8 illustrates a cross-sectional side view of a main manifold and sub-manifold arrangement of an injection molding system 800 in accordance with an embodiment of the present invention.

FIG. 9 illustrates a cross-sectional side view of the injection molding system 800 of FIG. 8 in accordance with another embodiment of the present invention.

FIG. 10 illustrates a cross-sectional side view of an injection molding system 200 in accordance with the embodiment shown in FIG. 3.

FIG. 11 illustrates a cross-sectional side view of the injection molding system 200 of FIG. 2 in accordance with another embodiment of the present invention.

FIG. 12 depicts a schematic diagram of exemplary uses for force sensor outputs according to an embodiment of the present invention.

### DETAILED DESCRIPTION OF THE INVENTION

Specific embodiments of the present invention are now described with reference to the figures, where like reference numbers indicate identical or functionally similar elements. Also in the figures, the left most digit of each reference number corresponds to the figure in which the reference number is first used. While specific configurations and arrangements are discussed, it should be understood that this is done for illustrative purposes only. A person skilled in the relevant art will recognize that other configurations and arrangements can be used without departing from the spirit and scope of the invention.

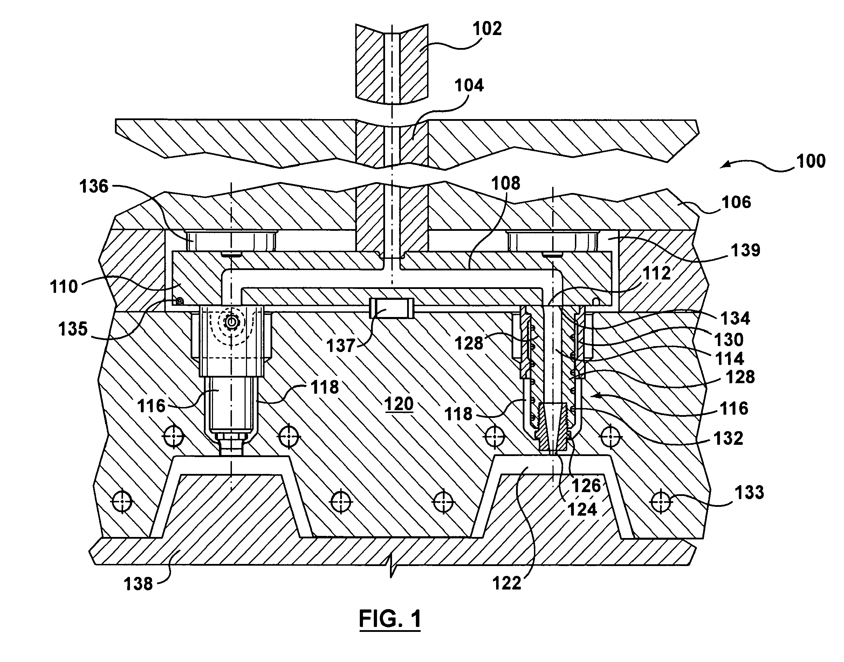

An example of an injection molding system 100 in which embodiments of the present invention may be utilized is shown in FIG. 1. A machine nozzle 102 of an injection molding system, which is a source of molten material, introduces a melt stream under pressure into injection molding system 100 via a sprue bushing 104 that is positioned within a back or clamping plate 106. From sprue bushing 104 the melt flows into a manifold melt channel 108 provided in a hot runner manifold 110. Manifold 110 is secured in position by a central locating ring 137, which bridges an insulative air space 139 between a lower surface of the heated manifold 110 and a cooled mold cavity plate 120, and by spacer or pressure disks 136, which bridge insulative air space 139 between an upper surface of manifold 110 and back plate 106. Spacers or pressure disks 136 also aid in sealing the melt path between hot runner nozzles 116 and manifold 110, as described further below.

In injection molding system 100, manifold 110 distributes the melt stream through manifold melt channel outlets 134 into nozzle melt channels 114 provided in respective hot runner nozzles 116. Hot runner nozzles 116 are positioned within nozzle bores or cavities 118 of mold plate 120 and aligned with a respective mold gate 124 by an alignment collar or flange 130. As would be apparent to one of ordinary skill in the art, mold cavity plate 120 may replaced by one or more mold plates and a mold cavity plate. A mold core plate 138 mates with mold cavity plate 120 to form mold cavities 122. Each hot runner nozzle 116 is in fluid communication with a respective mold cavity 122 via mold gate 124 so that the melt stream may be injected through nozzle melt channel 114 and a one-piece nozzle tip 126 into mold cavity 122.

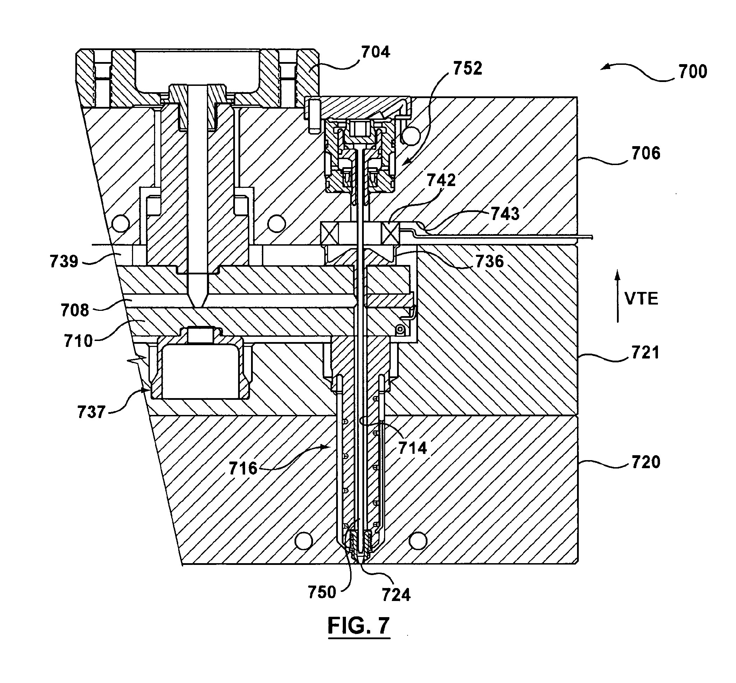

One of the hot runner nozzles 116 illustrated in FIG. 1 is shown in cross-section. Hot runner nozzle 116 has a nozzle melt channel inlet 112, at an upper end of nozzle melt channel 114, aligned with outlet 134 of manifold melt channel 108 to receive the melt stream. Hot runner nozzle 116 includes a nozzle body 128 and nozzle tip 126 that is threadably coupled thereto. Injection molding system 100 may include any number of such hot runner nozzles 116 located in respective nozzle bores 118 for distributing melt to respective mold cavities 122. Injection molding system 100 utilizes a heating element 135 in manifold 110, a heating element 132 in each nozzle 116, cooling channels 133 in mold plate 120 and thermocouples (not shown) to moderate the temperature of the melt in the system. As shown, hot runner nozzle 116 is thermal-gated, however it should be understood that hot runner nozzle 116 may alternatively be valve-gated, as discussed below with reference to FIG. 7.

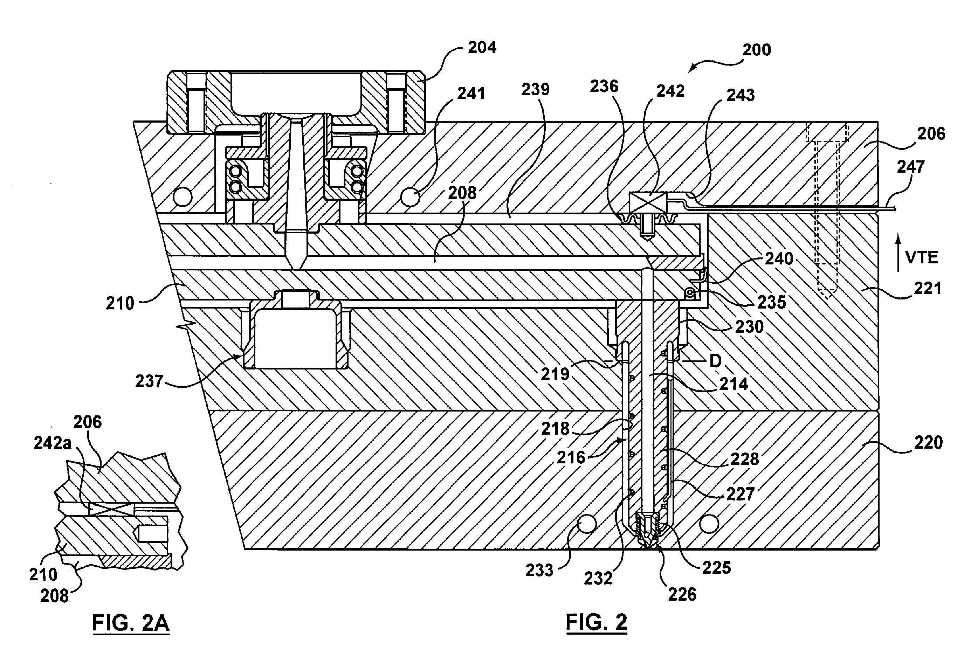

An injection molding system 200 according to an embodiment of the present invention is shown in FIG. 2, wherein only differing features and aspects are described in detail, while like parts of the previous embodiment can be used accordingly with this embodiment. Sprue bushing 204 is positioned in back or clamping plate 206 to receive melt from a melt source (not shown) and to deliver the melt to manifold channel 208 of manifold 210 for distribution to nozzle melt channel 214 of hot runner nozzle 216. Thermal-gated nozzle 216 is shown having a two-piece nozzle seal that includes nozzle tip 226 for delivering the melt to a mold cavity (not shown) secured via a tip retainer 225 to nozzle body 228. An exemplary two-piece nozzle seal arrangement that may be used in embodiments of the present invention is disclosed in U.S. Patent No. 5,299,928 to Gellert, which is incorporated by reference herein in its entirety. However as shown in FIG. 1, a one-piece nozzle tip 126 may alternatively be utilized in various embodiments in accordance with the present invention without departing from the scope thereof. Nozzle 216 sits within nozzle bore 218 and includes a nozzle head 230 that sits within and abuts a shoulder 219 of nozzle bore 218 to maintain alignment between nozzle melt channel 214 and manifold channel 208. Further during thermal expansion of nozzle 216 and manifold 210, shoulder 219 prevents nozzle 216 from moving away from and/or creating a gap at its interface with manifold 210, such that a sealing force may be achieved and maintained between the two melt conveying components during start-up and operation.

Manifold 210 is secured in position between clamping plate 206 and mold plate 221 by pressure disk 236, which bridges insulative air space 239 between an upper surface of manifold 210 and clamping plate 206, and by central locating ring 237, which bridges insulative air space 239 between a lower surface of the heated manifold 210 and mold plate 221. An exemplary pressure disk or spacer member 236 that may be utilized in embodiments of the present invention is disclosed in U.S. Patent No. 5,125,827 to Gellert, which is incorporated by reference herein in its entirety. In various embodiments, pressure disk or spacer member 236 may be relatively flexible to absorb some of the heat expansion force, or may be relatively rigid simply to maintain the insulative air space 239 without substantially flexing to accommodate the heat expansion force. As clamping plate 206 is customarily kept cool by pumping cooling fluid through cooling channels 241, pressure disk 236 may be made out of a thermally insulative material so as to minimize heat transfer between the heated manifold 210 and the cooled clamping plate 206 during operation.

In the embodiment of FIG. 2, a force sensor or load cell 242 is positioned between pressure disk 236 and clamping plate 206. Load cell 242 is a transducer which converts a force or load acting on it into a measurable electrical output and, in an embodiment, may include a strain gauge. Load cell 242 includes leads 247 that communicate with a power source (not shown) and a receiving device 1275, e.g., a controller, such as, an injection molding machine controller 1275d and/or a data processing device, such as, a wireless or dedicated display panel 1275a and/or notification device 1275b, and/or a display/control panel of a hot runner system 1275c.

A depth of shoulder 219 of nozzle bore 218 is suitable as a datum "D", i.e., reference point, for measuring the vertical or axial thermal expansion of the hot runner components, as represented by arrow "VTE" in FIG. 2. In an embodiment, a total of the vertical thermal expansion of the system may be the sum of the vertical thermal expansion of nozzle head 230 and that of manifold 210 with respect to the datum "D." The vertical thermal expansion of the hot runner components is resisted by clamping plate 206, which imparts a compressive force onto nozzle head 230, manifold 210, insulative pressure disk 236 and load cell 242. This compressive force acts as a sealing force between the interface surfaces of nozzle head 230 and manifold 210 to prevent plastic leakage between the two melt conveying components. A measure of this compressive/sealing force is obtained by load cell 242, such that an output therefrom is transmitted to, for example, receiving device 1275, such as the controller or data processing devices mentioned above.

Hot runner systems may be designed and built to have an initial preload when in the cold condition. If this is the case the sealing force will be a combination of an initial assembly preload plus the additional force due to the thermal expansion of the system when the system is brought up to an operating temperature. Hot runner systems may also be designed and built so that there is no initial preload between the components in the cold condition and the sealing force between components is generated solely by the thermal expansion within the system when the system is brought up to the operating temperature.

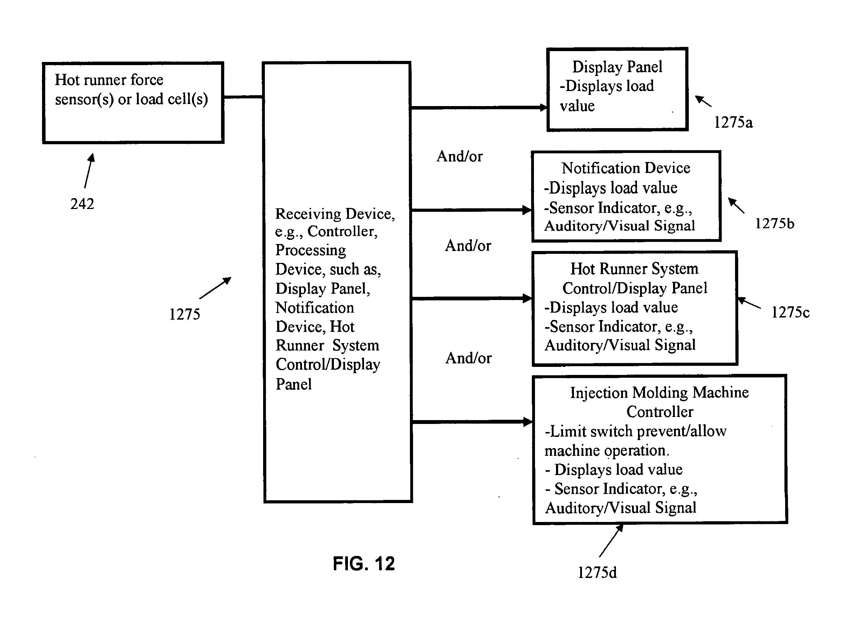

With reference to FIG. 12, an output from load receiving device 1275 may be a numerical display on display panel 1275a, wherein a mold operator may commence leak free production when a pre-determined minimum sealing load value is registered. In various embodiments, display panel 1275a may be wireless and/or portable and dedicated to receiving signals solely from force sensors 242. In another embodiment, the output from load receiving device 1275 may be indicated by an indicator signal, such as, an auditory or visual signal, e.g., a buzzer, chime or light, that is activated in notification device 1275b when the minimum sealing load value is registered, wherein the mold operator may commence leak free production when the auditory or visual signal goes off. If a visual signal is utilized, such as a light, the light may extinguish upon reaching the minimum sealing load value. In various embodiments, notification device 1275b may be wireless and/or portable and dedicated to receiving signals solely from force sensors 242. In another embodiment, a display/control panel of the hot runner system 1275c may display the load values and/or include an indicator signal, such as an auditory or visual alarm, that indicates when the minimum sealing load has been reached. Each of display panel 1275a, notification device 1275b and/or display/control panel 1275c may be used to communicate when a maximum safe load has been exceeded, such that the mold operator may shut-down the system to determine the source of and correct the problem before damage occurs to the system, as discussed further below.

Alternatively or in addition to the foregoing, an output from load receiving device 1275 may be utilized by the controller 1275d of the injection molding machine and integrated with operation of the injection molding machine through the use of a limit switch or other mechanism. The limit switch may be set to prevent plastic injection until a minimum sealing load value is registered and/or to interrupt a production run if the sealing load falls below or rises above a certain level. If, for instance, during a production run the load registered by force sensor or load cell 242 falls below the pre-determined minimum sealing load value, the machine controls may be set to automatically stop the injection molding machine. Such an embodiment may prevent leakage from occurring across the monitored sealing area. The hot runner system could then be examined for the cause of the lost sealing force without having to first clean leaked plastic from the system. In another embodiment, if during a production run the load registered by force sensor or load cell 242 exceeds a maximum safe load, *i.e.,* the maximum load the hot runner can handle before components are permanently damaged or deformed, such as damage or deformity which may occur as a result of overheating of the entire hot runner, overheating in an isolated area of the hot runner, and/or unbalanced loading due to improper machine tolerances, mold assembly and/or wear of components over time, the machine controls may be set to automatically stop the injection molding machine, such that the source of the problem may be identified and addressed.

In various embodiments of the present invention, a minimum sufficient force, *i.e.,* sealing load or pre-determined set point, may range from 3-20 Tonnes depending on the scale of the hot runner system. There are many ways by which the minimum sealing load can be calculated or approximated, an example of which is to multiply the expected or maximum injection pressure by the cross-sectional area of the melt channel(s) across the melt conveying components to be sealed. In addition, a mold maker, molder, or operator may choose to multiply this result by a safety factor of 20-50%. Experienced operators may have an idea of what sealing force will generally work for a given injection molding system, and may choose the set point based on his assumption; however, this is more of a trial and error approach. In other instances, molders may want to choose a sealing load value they are comfortable with and use this across the board for every injection molding system they operate.

Load cell 242 is situated between a melt conveying component, i.e., hot runner manifold 210, and a fixed mold housing plate, i.e., clamping plate 206, of hot runner system 200 to measure the vertical or axial force achieved within the system during thermal expansion that occurs as the hot runner components are brought up to operating temperatures. Since sealing of the melt path between melt conveying components of injection molding system 200 prior to starting-up operation is predicated on a certain amount of thermal expansion in the vertical or axial direction of its melt conveying components, the use of load cell 242 to monitor the vertical or axial force being generated between manifold 210 and clamping plate 206 allows the determination of when the appropriate sealing force has been reached between manifold 210, for instance, and hot runner nozzle 216. The sealing force measurements may be reviewed by an operator to determine when to begin the molding process, or used to control a limit switch that will not let the molding process start until a proper sealing force set point has been reached. The sealing force measurements may also be used to monitor when a system requires maintenance, as discussed above.

Although in the embodiment of FIG. 2 load cell 242 is shown positioned within a cut-out 243 in a lower surface of clamping plate 206, it should be understood that load cell 242 could be positioned within insulative air space 239 between disk 236 and the lower surface of clamping plate 206. Exemplary load cells that may be utilized in high pressure and temperature environments according to embodiments of the present invention are available through Sensotec Sensors a division of Honeywell Sensing and Control located in Columbus, Ohio. In another embodiment, a load cell 242 may be combined within a pressure disk or pad 236 so as to be an integrated device. In a further embodiment as shown in FIG. 2A, a load cell 242a may be made of a material that has sufficient resistance to the manifold temperature and sufficient insulative properties to prevent excessive heat from being drawn out of manifold 210 to clamping plate 206, such that a separate insulative pressure disk 236 is not necessary. Load cell 242a may include a coating or layer of an insulative material on its top and bottom contacting surfaces, such as, titanium, ceramic, or a heat resistant polymer, for example, polyimide in order to increase its insulative properties.

Injection molding system 200 adjusts the temperature of the melt through the control of a manifold heating element 235, which is secured within a lower surface of manifold 210, and nozzle heating element 232, which in this embodiment is located in an outer surface of nozzle body 228, as well as through the control of cooling fluid within cooling channels 233 situated in mold cavity plate 220. Heating elements 232, 235 are constructed of a resistance wire covered with a dielectric material, but it shall be appreciated that any heating element known in the art may be employed. Heating elements 232, 235 may be secured within the respective surface of nozzle 216 and manifold 210 by a press fit or through bonding techniques, such as brazing, spot welding, or any other securing method known to one skilled in the relevant art. Thermocouples 227, 240 are positioned proximate heating elements 232, 235 to measure a temperature thereof, which is used in monitoring and controlling operation of the heating elements.

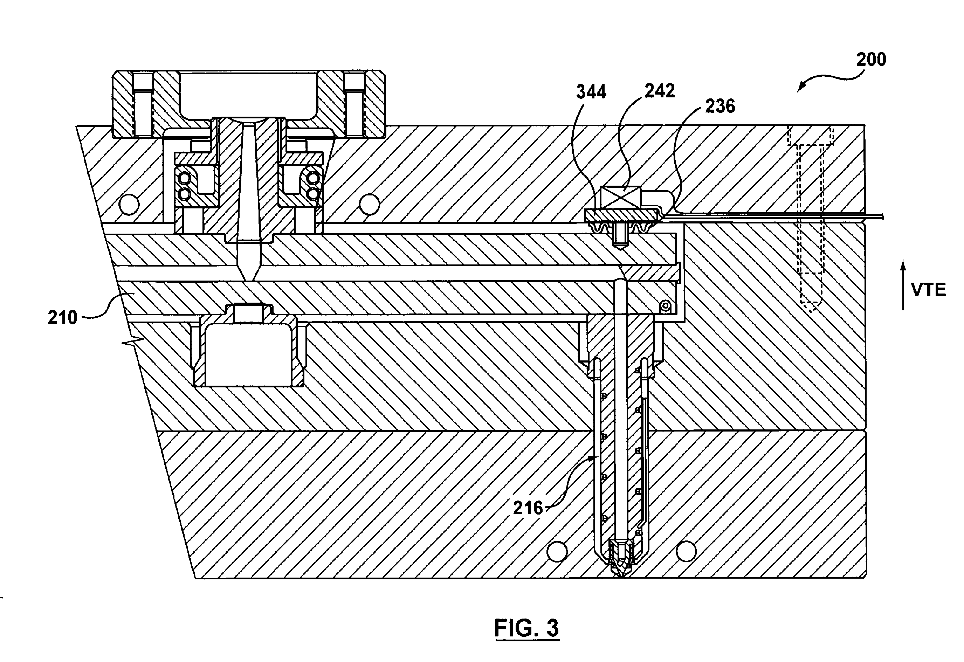

FIGS. 3-6 illustrate various embodiments of injection molding system 200 that utilize one or more pressure transducers or load cells for monitoring the sealing load between nozzle 216 and manifold 210, nozzle 216 and a mold gate, and/or nozzle components, such as nozzle tip 226 and nozzle body 228, during start-up and/or operation. In each of FIGS. 3-6, the load cell or cells measures a force responsive to the vertical or axial thermal expansion, as represented by arrows VTE, of the mold conveying component(s).

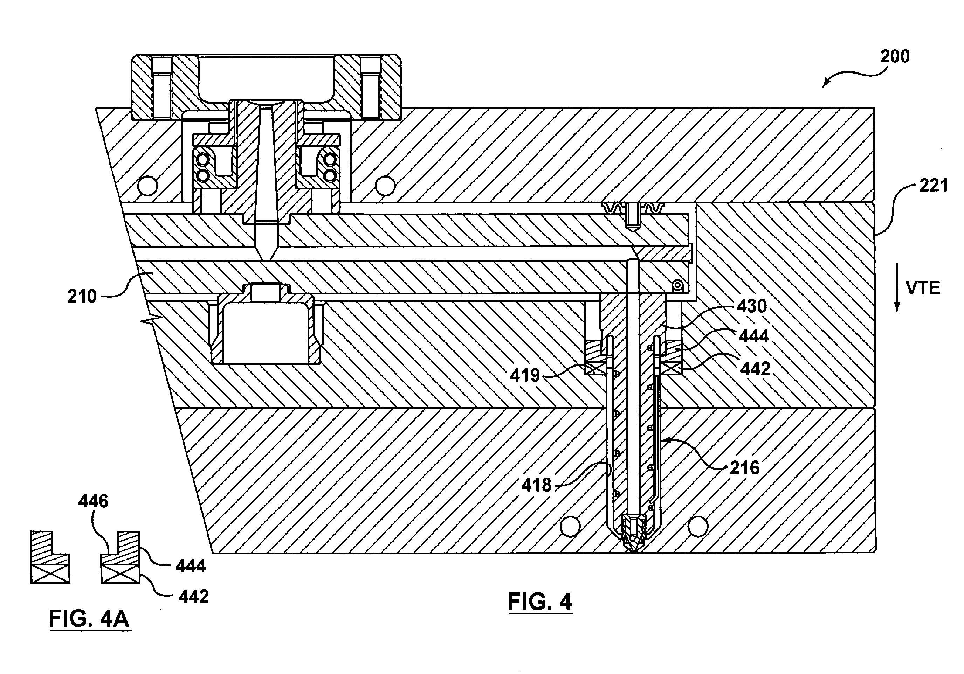

Fig. 3 illustrates the use of a spacer 344 between load cell 242 and pressure disk 242. In certain applications, spacer 344 may more evenly distribute the load on pressure disk 236 to increase the accuracy of the force measured by load cell 242, which correlates to the sealing force between nozzle 216 and manifold 210. FIG. 4 illustrates the use of a donut-shaped force sensor or load cell 442 between nozzle head 430 of nozzle 216 and a shoulder 419 of nozzle bore 418 within mold plate 221. In an alternate embodiment as shown in FIG. 1, a separate alignment collar or flange130 may be used for aligning nozzle 216, such that load cell 442 may be placed between alignment collar 130 and shoulder 419. An insulative spacer 444 is shown positioned between alignment collar 430 and load cell 442 to reduce heat loss between nozzle 216 and mold plate 221. Insulative spacer 444 may be made of titanium, a heat resistant polymer, for example, polyimide, ceramic or any other material that is equal to or less thermally conductive then the material of nozzle 216, nozzle head 430, alignment collar or flange 130, or mold plate 221 and that can handle the temperatures and pressures that the hot runner system is subjected to during operation. Typically, nozzle head 430 and mold plate 221 are made from a grade of steel chosen for the particular application. Alignment collar or flange 130 may be made of steel; however, it too may be made of a more thermally insulative material than nozzle 216 or nozzle head 430 and mold plate 221. Insulative spacer 444 includes a recessed portion 446, as illustrated in FIG. 4A, for receiving a lower portion of nozzle head 430. Load cell 442 measures a force between nozzle 216 and mold plate 221, which correlates with the sealing force between nozzle 216 and manifold 210. In certain applications, nozzle head 430, alignment flange 130 or load cell 442 may be made of an insulative material, such that spacer 444 may be eliminated with load cell 442 making direct contact with nozzle head 430 or alignment flange 130.

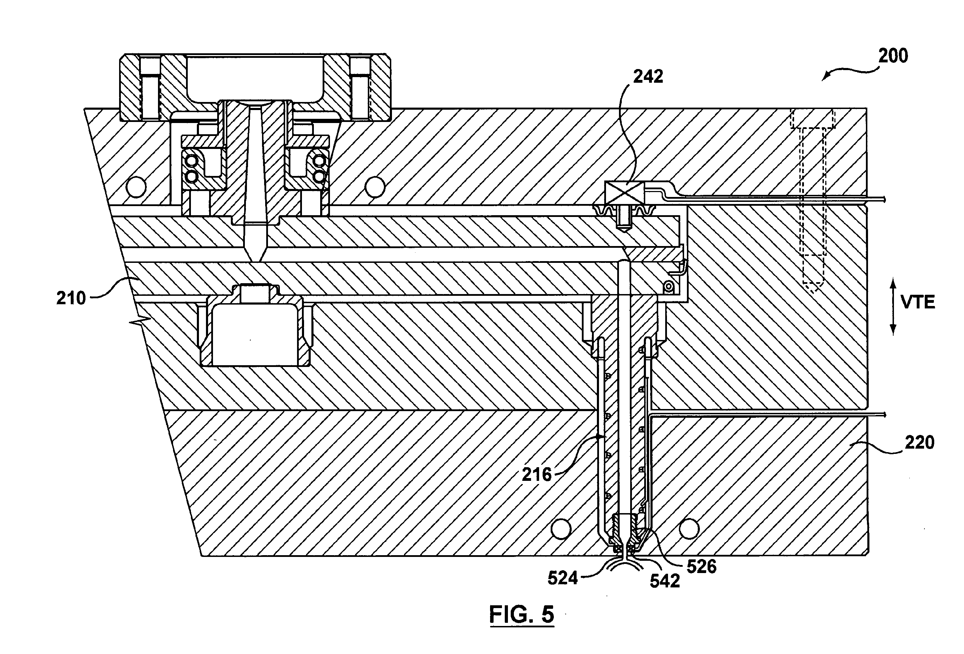

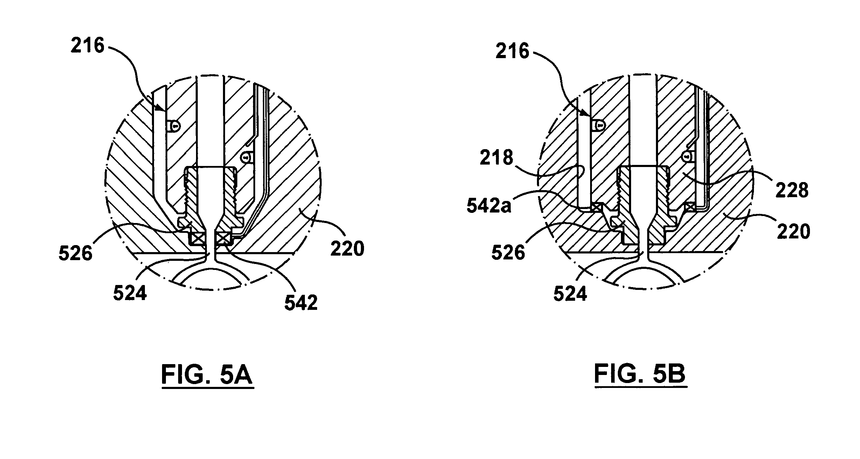

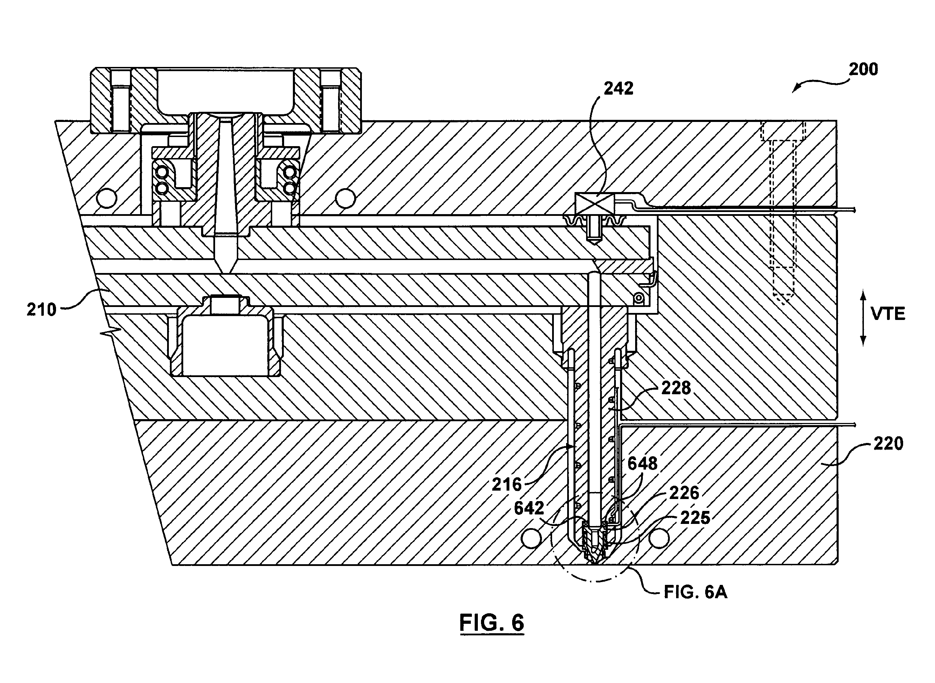

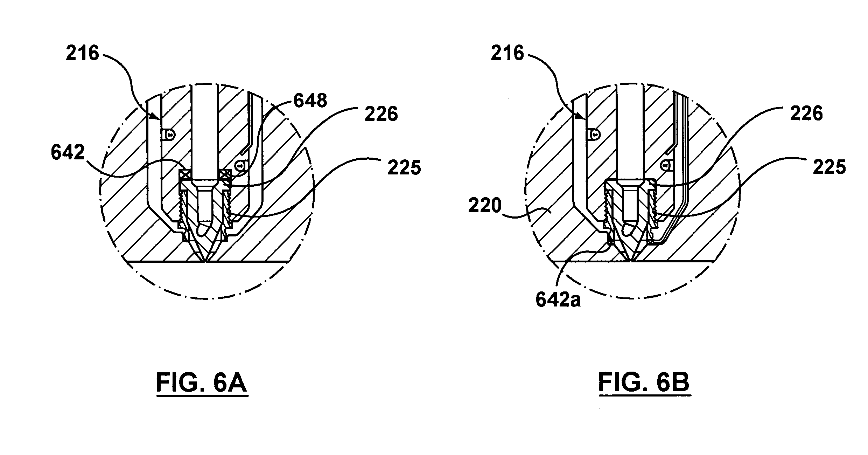

FIGS. 5 and 5A illustrate an embodiment of injection molding system 200 that provides a first load cell 242 positioned as in the embodiment of FIG. 2 and a second, donut-shaped force sensor or load cell 542 positioned between a lower surface of a one-piece tip 526 and mold cavity plate 220 proximate mold gate 524. FIG. 5B illustrates an enlarged view of the front end of nozzle body 228 of nozzle 216 of FIG. 5 in accordance with another embodiment of the present invention, wherein load cells 542a is positioned between the front end of nozzle body 228 and mold plate 220 within nozzle bore 218. FIGS. 6 and 6A illustrate a further embodiment of injection molding system 200 that provides a first load cell 242 positioned as in the embodiment of FIG. 2 and a second, donut-shaped force sensor or load cell 642 positioned between an upper surface of nozzle tip 226 and a seat 648 within a front end bore of nozzle body 228. FIG. 6B illustrates an enlarged view of the front end of nozzle 216 of FIG. 6 in accordance with another embodiment of the present invention, wherein load cells 642a is positioned between the front end of tip retainer 225 and mold plate 220. In each of the embodiments of FIGS. 5A, 5B, 6A and 6B, load cells 542, 542a, 642, 642a provide a force measurement proximate the mold gate area that correlates with the amount of thermal expansion that has occurred within nozzle body 228, nozzle tip 226, 526 and/or tip retainer 225, such that a determination of the sealing load in the gate area may be more accurately determined. It would be understood by one of ordinary skill in that art that a one, two or other multiple piece nozzle tip arrangement may be utilized in various embodiments in accordance with the present invention without departing from the scope thereof

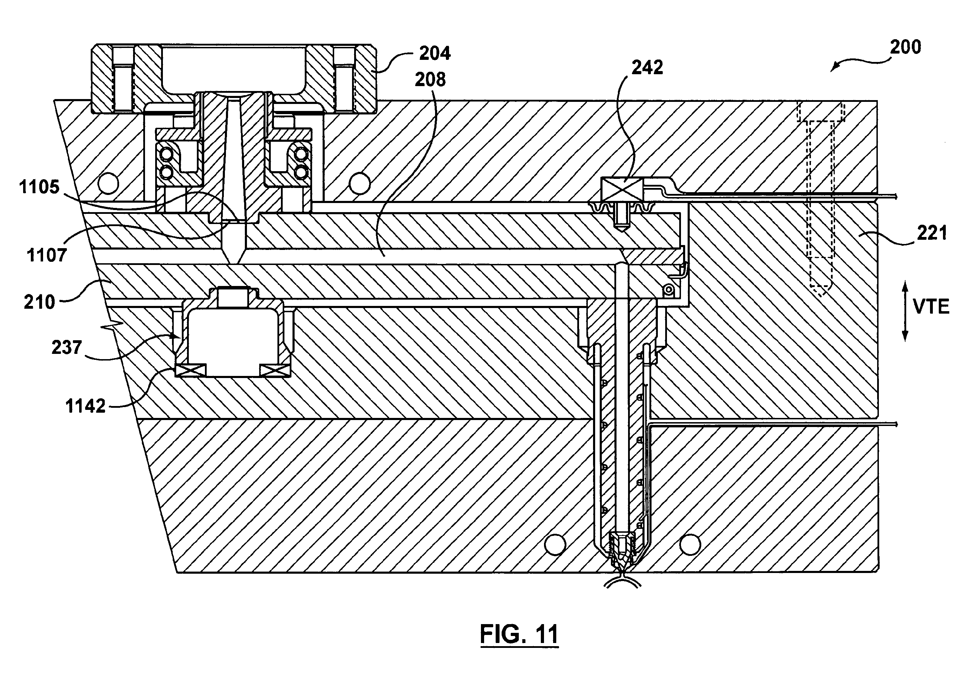

FIG. 11 illustrates an embodiment of injection molding system 200 that provides a first load cell 242 positioned as in the embodiment of FIG. 2 and a second, donut-shaped force sensor or load cell 1142 positioned between central locating ring 237 and mold plate 221. Second load cell 1142 provides a force measurement proximate an inlet 1107 of melt channel 208 of manifold 210 and an melt outlet 1105 of sprue bushing 204 that correlates with the amount of thermal expansion that has occurred within manifold 210. Accordingly, a determination of the sealing load between manifold 210 and sprue bushing 204 in the melt channel outlet/inlet 1105, 1107 area may be more accurately determined.

An injection molding system 700 according to a valve-gated embodiment of the present invention is shown in FIG. 7, wherein only differing features and aspects are described in detail, while like parts of the previous embodiments can be used accordingly with this embodiment. Sprue bushing 704 is positioned in back or clamping plate 706 to receive melt from a melt source (not shown) and to deliver the melt via manifold 710 for distribution to nozzle melt channel 714 of hot runner valve-gated nozzle 716. As in the embodiment of FIG. 2, nozzle 716 is shown having a two-piece nozzle seal for delivering the melt to a mold cavity (not shown) via mold gate 724. A valve pin 750 is shown within nozzle melt channel 714 that is movable between an open position, wherein a forward end of valve pin 750 is unseated from mold gate 724 to allow melt to flow there through, and a closed position, wherein the forward end of valve pin 750 is seated within mold gate 724 to stop the flow of melt there through. A valve pin actuator 752 is positioned within back plate 706 and is operatively connected to valve pin 750 for moving valve pin 750 between its open and closed positions. Actuator 752 may be any suitable type actuator, for example, a hydraulic, pneumatic or electric actuator.

Similarly to the embodiment of FIG. 2, manifold 710 is secured in position between clamping plate 706 and mold plate 721 by valve bushing 736, which bridges insulative air space 739 between an upper surface of manifold 710 and clamping plate 706, and by central locating ring 737, which bridges insulative air space 739 between a lower surface of the heated manifold 710 and mold plate 721. Exemplary valve bushings 736 that may be utilized in embodiments of the present invention are disclosed in U.S. Patent No. 4,740,151 to Schmidt et al*.* and U.S. Patent No. 6,840,758 to Babin et al., each of which is incorporated by reference herein in its entirety. Customarily, the valve bushing provides a seal between the valve pin and the manifold melt channel; however in this embodiment, valve bushing 736 also includes a spacer portion to provide an insulation air gap between manifold 710 and clamping plate 706. Embodiments of the present invention may include any of any of the valve pin bushings currently available on the market that do not include a spacer portion.

In the embodiment of FIG. 7, a donut-shaped force sensor or load cell 742 is positioned between valve bushing 736 and clamping plate 706 to measure the vertical or axial load within the system that occurs due to the vertical or axial thermal expansion, as represented by arrow VTE, of the hot runner components as the system is brought up to operating temperatures. The use of load cell 742 to monitor the vertical load being generated between manifold 710 and clamping plate 706 allows the determination of when the appropriate sealing force has been reached between manifold 710 and nozzle 716 of injection molding system 700. Although in the embodiment of FIG. 7 load cell 742 is shown positioned within a cut-out 743 in a lower surface of clamping plate 706, it should be understood that depending on the needs of the particular application, load cell 742 could be positioned within insulative air space 739 between valve bushing 736 and the lower surface of clamping plate 706 and/or a spacer (not shown) may be positioned between load cell 742 and valve bushing 736.

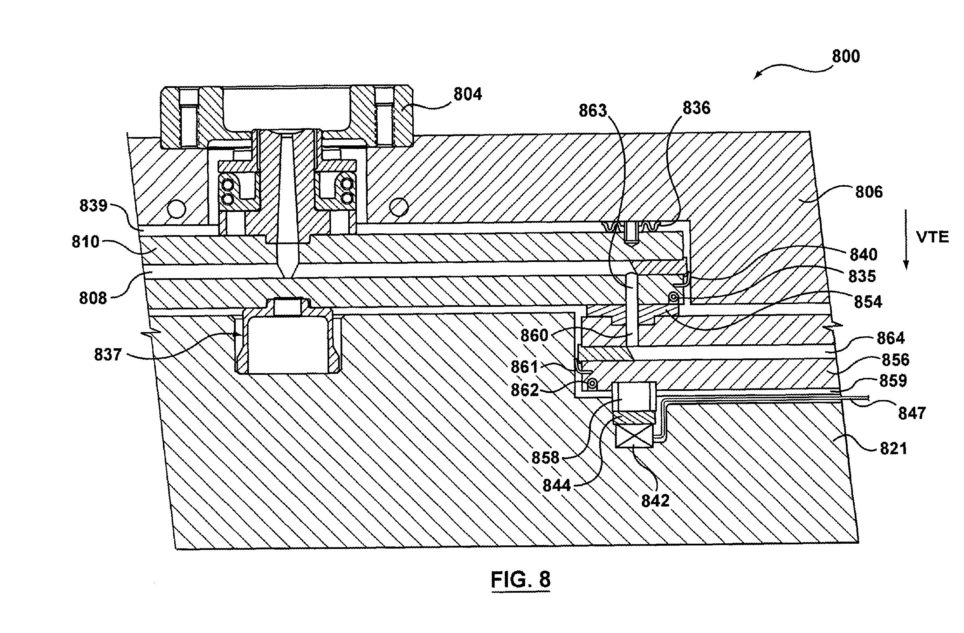

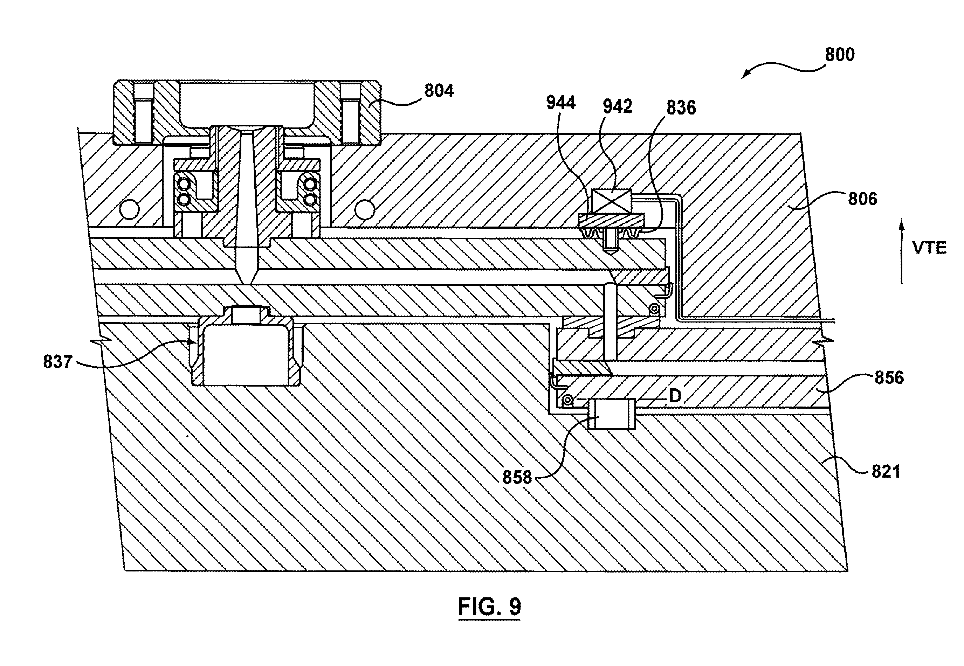

Embodiments of an injection molding system 800 are illustrated in FIGS. 8 and 9, wherein only differing features and aspects are described in detail, while like parts of the previous embodiment can be used accordingly with this embodiment. Sprue bushing 804 is positioned in back or clamping plate 806 to receive melt from a melt source (not shown) for delivery to a main manifold 810, which then distributes the melt to at least one sub-manifold 856. Main manifold 810 is secured in position between clamping plate 806 and mold plate 821 by pressure disk 836, which bridges insulative air space 839 between an upper surface of manifold 810 and clamping plate 806, and by central locating ring 837, which bridges insulative air space 239 between a lower surface of the heated manifold 810 and mold plate 821. In addition, sub-manifold 856 is at least partially secured in position between clamping plate 806 and mold plate 821 by sub-manifold locator device 858, which bridges insulative air space 859 that surrounds sub-manifold 856, and by the juxtaposition of an inlet seal 854 between a portion of main manifold 810 proximate main manifold melt outlet 863 with a corresponding portion of sub-manifold 856 proximate a sub-manifold melt inlet 860.

Main manifold 810 includes heating element 835 in a lower surface thereof and sub-manifold 856 includes heating element 862 in a lower surface thereof. Main and sub-manifold heating elements 835, 862 are used during start-up to bring injection molding system 800 up to an operating temperature to allow for pre-operation thermal expansion of the hot runner components and thus a proper sealing load between the main and sub-manifold components of the system. Main and sub-manifold thermocouples 840, 861 are positioned proximate main and sub-manifold heating elements 835, 862 to measure a temperature thereof, which is used in monitoring and controlling operation of heating elements 835, 862.

In the embodiment of FIG. 8, a force sensor or load cell 842 is positioned between sub-manifold locator device 858 and mold plate 821. Load cell 842 is situated within a cut-out in mold plate 821 and includes leads 847 that communicate with a power source and a controller (not shown). In the embodiment of FIG. 9, a force sensor or load cell 942 is positioned between pressure disk 836 and clamping plate 806, wherein load cell 942 is situated within a cut-out in clamping plate 806. A spacer 844, 944 to more uniformly distribute the generated load is optionally shown between locator device 858/load cell 842 in FIG. 8 and pressure disk 836/load cell 942 in FIG. 9, respectively, as may be warranted in certain injection molding applications.

Load cells 842, 942 are suitably placed to measure the vertical load within injection molding system 800 that occurs due to the vertical or axial thermal expansion, as represented by arrows VTE in FIGS. 8 and 9, of main manifold 810 and sub-manifold 856 as the system is brought up to operating temperatures. The use of load cell 842, 942 to monitor the vertical or axial load being generated between main manifold 810 and clamping plate 806 and/or sub-manifold 856 and mold plate 821 allows the determination of when the appropriate sealing force has been reached between main manifold 810 and sub-manifold 856 of injection molding system 800.

An embodiment of the present invention includes a method of operating an injection molding system having a plurality of melt conveying components defining a melt path from a melt source to a mold cavity. The method includes bringing the melt conveying components of the system up to an operating temperature while monitoring the sealing force generated by thermal expansion across the plastic sealing interfaces. The force being measured is the result of thermal expansion of the melt conveying component. Once the force reaches a sealing load, which correlates to the melt path of the injection molding system being sealed between its melt conveying components, or a predetermined set point, an injection molding cycle may begin. In an embodiment, the hot runner melt conveying component may be a hot runner manifold and the load is measured by a load cell disposed between the manifold and at least one of a back plate and a mold plate of the mold housing. In another embodiment, the hot runner melt conveying component may be a hot runner nozzle and the load is measured by a load cell disposed between at least one of an alignment collar and a nozzle tip retainer of the nozzle and a mold plate of the mold housing. In a further embodiment, the injection molding system may include a limit switch that prevents the beginning of the injection molding cycle until the sealing load is reached in the system.

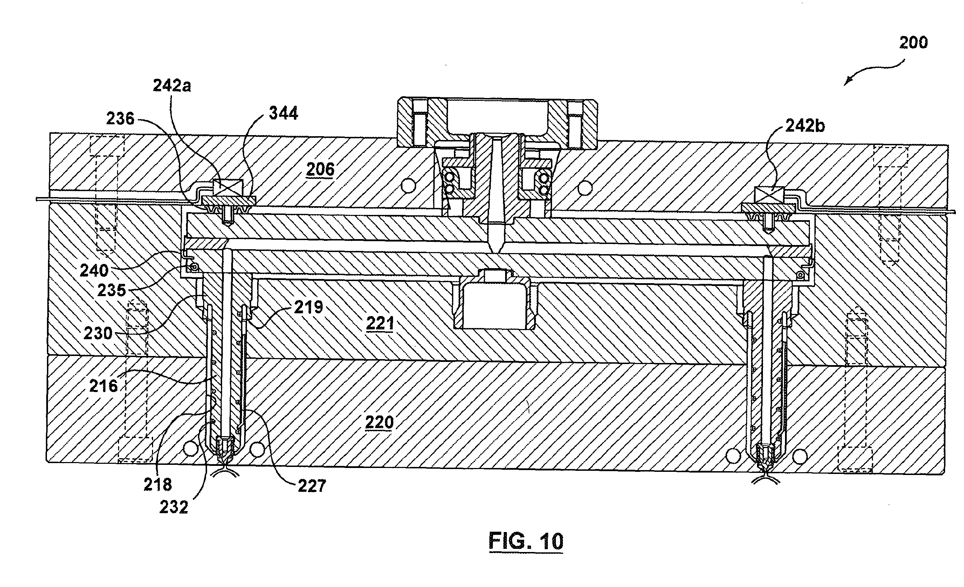

FIG. 10 illustrates a full cross-sectional side view of injection molding system 200 of FIG. 3. With reference to FIG. 10, as the hot runner melt conveying components are being heated up in the injection molding machine, an operator would expect to receive feedback from load cells 242a, 242b indicating that a minimum sealing force has been reached and that operation is set to begin. In certain instances, however, one or more load cells in the system may not indicate the minimum sealing load or predetermined minimum sealing force has been achieved.

For instance, if load cell 242a proximate the area "A" in FIG. 10 does not register that the predetermined minimum sealing force has been achieved while load cell 242b proximate the area "B" in FIG. 10 registers the predetermined minimum sealing force has been reached, the operator may perform some checks on the injection molding system to determine the source of the low sealing force measurement at "A". The operator may preliminary confirm whether heaters 232, 235 controlling the thermal expansion in the subject area are operating properly by checking the temperature controllers, and/or confirm whether thermocouples 227, 240 in the subject area are operating correctly and whether the heaters 232, 235 have reached operating temperature by checking the temperature controllers. If these preliminary checks do not reveal any problems, the mold may be removed from the press for a more detailed investigation. Bench checks may include: confirming the screws holding mold plates 206, 220, 221 together, in the subject area, are tightened to the proper torque, as inadequate torque in the screws will not hold the mold plates together tightly enough to generate adequate preload force; confirming the screws holding mold plates 206, 220, 221 together, in the subject area, are sufficient in number and strength to hold the mold plate together tightly enough to generate adequate preload force; confirming pressure disc 236, in the subject area, is at the proper thickness to generate the predetermined minimum preload force; confirming whether shoulder 219 of nozzle bore 218, in the subject area, is at the proper elevation to generate the predetermined minimum sealing force; and/or confirming whether nozzle flange 230, in the subject area, is the proper thickness to generate the predetermined minimum sealing force. Once the source of the inadequate sealing force in area "A" has been determined and rectified, operation of the system may commence.

If the hot runner system is designed and built with a cold condition preload, it may also be possible to use the force sensors or load cells to confirm that this preload is correct across the system. If the preload is inconsistent, the mold may not have been assembled correctly, i.e., screws not tightened to correct torque, or perhaps the components were not built to the correct tolerances, such that further machining and/or spacers may be needed to compensate. If the system is designed to have a preload and the force sensors or load cells determine that the preload is too low, the designed heat expansion may not necessarily be able to compensate for this and the sufficient sealing force required may not be reached, such that the injection process should not be started until the preload condition is rectified. Similarly the force sensors or load cells may also be utilized to measure/detect/signal a maximum safe load, this is the maximum load the hot runner can handle before components are permanently damaged or deformed, such as damage or deformity that may occur as a result of overheating of the entire hot runner, overheating in an isolated area of the hot runner, and/or unbalanced loading due to improper machine tolerances, mold assembly or wear of components over time.

While various embodiments according to the present invention have been described above, it should be understood that they have been presented only by way of illustration and example, and not limitation. It will be apparent to persons skilled in the relevant art that various changes in form and detail can be made therein without departing from the scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment.

## Claims

1. A method of operating an injection molding system having a plurality of melt conveying components defining a melt path from a melt source to a mold cavity and a mold housing, the method comprising:
bringing the melt conveying components of the system up to an operating temperature;
monitoring a force between at least one of the melt conveying components and the mold housing while the system is being brought-up to the operating temperature, wherein the force being measured is the result of thermal expansion of the melt conveying component; and
beginning an injection molding cycle once a sealing load is reached, wherein the melt path between melt conveying components is sealed.

2. The method of claim 1, wherein one of the hot runner melt conveying components is a hot runner manifold (210) and the force is measured by a force sensor disposed between the manifold and at least one of a back plate and a mold plate of the mold housing.

3. The method of claim 1, wherein one of the hot runner melt conveying components is a hot runner nozzle and the force is measured by a force sensor disposed between at least one of a nozzle body, a nozzle tip, a nozzle flange, an alignment collar and a nozzle tip retainer of the nozzle and a mold plate of the mold housing.

4. The method of one of claims 1 to 3, further comprising:
converting the force into an electrical output;
transmitting the electrical output to a receiving device (1275); and
processing the measured force into at least one of a load value and an indicator signal.

5. The method of claim 4, wherein the receiving device is a display panel (1275a) and the load value is readable by a mold operator.

6. The method of claim 4, wherein the receiving device is an injection molding machine controller (1275d) and the load value is used to prevent operation of the injection molding machine below a sealing load value.

7. The method of claim 4, wherein the receiving device is one of a display panel (1275a), a notification device (1275b), a control panel (1275c), or a controller (1275d) and the load value is used to communicate when a maximum safe load has been exceeded.

8. The method of one of claims 4 to 7 wherein the indicator signal of the receiving device is one of an auditory or visual signal (1275b) that activates when a sealing load is reached.

9. The method of claim 1 to 8, further comprising:
providing a limit switch to prevent the beginning of the injection molding cycle until the sealing load is reached.
